# EUROPÄISCHE PATENTANMELDUNG

(11) **EP 4 718 544 A1**
(43) Veröffentlichungstag der Anmeldung: **01.04.2026**
(21) Anmeldenummer: 25203361.8
(22) Anmeldetag: 19.09.2025
(51) Int. Cl.: H01M 4/88, H01M 8/1004

(54) **VERFAHREN ZUR HERSTELLUNG EINER MEMBRAN-ELEKTRODENEINHEIT (MEA) FÜR EINE ELEKTROCHEMISCHE ZELLE, INSBESONDERE BRENNSTOFFZELLE, SOWIE ANLAGE ZUR HERSTELLUNG DER MEA**

(30) Priorität: 25.09.2024 DE 102024127701
(71) Anmelder: Carl Freudenberg KG, 69469 Weinheim (DE)
(72) Erfinder: Kohl, Jacqueline, 85598 Baldham (DE); Penoty, Pascal, 85614 Kirchseeon (DE)

(57) **Zusammenfassung**

Die Erfindung betrifft ein Verfahren zur Herstellung einer Membran-Elektrodeneinheit MEA (10) für eine elektrochemische Zelle, insbesondere eine Brennstoffzelle, sowie eine Anlage (100) zur Herstellung einer Membran-Elektrodeneinheit (10) gemäß diesem Verfahren. Erfindungsgemäß wurde als vorteilhaft erkannt vor dem Konfektionieren der MEA, z.B. durch Stanzen in einer Stanzeinheit (40), die MEA in einer Laminiereinheit (20) zu laminieren und die MEA (10) während des Konfektionierprozesses durch eine Trägerlage (18) zu stützen.

## Beschreibung

Verfahren zur Herstellung einer Membran-Elektrodeneinheit (MEA) für eine elektrochemische Zelle, insbesondere Brennstoffzelle, sowie Anlage zur Herstellung der MEA

### Beschreibung

Die Erfindung betrifft ein Verfahren zur Herstellung einer Membran-Elektrodeneinheit (MEA) für eine elektrochemische Zelle, insbesondere eine Brennstoffzelle, sowie eine Anlage zur Herstellung einer Membran-Elektrodeneinheit gemäß diesem Verfahren.

### Stand der Technik

Membran-Elektrodeneinheiten (engl. membrane electrode assembly, MEA), im Folgenden MEA genannt, sind die Kernkomponente in sogenannten Polymer-Elektrolyt-Membran (PEM)-Brennstoffzellen. In der MEA finden die elektrochemischen Reaktionen einer Brennstoffzelle oder eines Elektrolyseurs statt. Daher besteht die MEA aus verschiedenen funktionellen Aktivmaterialien, bekannt ist beispielsweise ein 7-lagiger Aufbau der MEA.

Im einfachsten Fall umfasst die MEA eine Protonen-Austausch-Membran (PEM) aus einem polymeren, ionenleitenden Material eingefasst in zwei Elektroden (Anode und Kathode), jeweils bestehend aus einer Kohlenstoff-KatalysatorSchicht, auf jeder Seite einer microporöse Schicht (MPL) und einer porösen, luftdurchlässigen Gas-Diffusions-Lage (GDL).

Der Verbund aus der PEM-Membran und den Elektroden wird auch als CCM (engl. Catalyst coated membrane) bezeichnet. Wenn die Elektroden direkt auf die GDL aufgebracht wird, nennt man den Verbund aus Katalysatorbeschichteten GDL auch Gasdiffusionselektroden (GDEs). Die GDL ist in der Regel katalysatorseitig noch mit einer mikroporösen Schicht (MPL) versehen.

Die Elektroden umfassen in der Regel Katalysatoren, die mit dem sogenannten Ionomer vereint sind. An der Katalysatoroberfläche laufen die anodische Wasserstoffoxidationsreaktion und die kathodische Sauerstoffreduktionsreaktion ab. Diese Reaktionen erzeugen den später nutzbaren Strom aus der chemischen Energie der Brennstoffe. Das Ionomer übernimmt die elektrolytische Leitungsfunktion, während der Katalysatorträger oder der Katalysator selbst die elektrische Leitung übernehmen.

Die Membran separiert die Elektroden voneinander. Sie verhindert nicht nur den Fluss von Elektronen, sondern auch den Gasaustausch zwischen den beiden Elektroden. Neben der separierenden Funktion hat die Membran auch die Funktion, die Diffusion von Protonen (Produkt der anodischen Wasserstoffoxidationsreaktion) von der Anode zur Kathode zu ermöglichen. Diese Protonen reagieren an der Kathode zu Wasser ab.

Die GDL und die darauf applizierte MPL haben die Funktion, die Edukte der elektrochemischen Teilreaktionen (Wasserstoff und Luftsauerstoff) sowie das bei den Reaktionen entstehende Wasser den Elektroden ab und auch zuzuführen.

Um die MEA betreiben zu können müssen die beiden Elektroden an der Grenzfläche zur Peripherie ebenfalls gasdicht getrennt werden; dies wird durch das sogenannte Gasket (manchmal auch innere Dichtung) sichergestellt. Das Gasket separiert die Medien der Anode und Kathode an der Grenzfläche der Aktiv-Materialien (Elektroden, Membran, GDL/MPL).

In der EP 3 496 194 B1 sind sogenannte Flush-cut MEAs beschrieben, bei welchen die mittige Protonenaustauschmembran und die diese sandwichartig umgebenden Elektroden umfassend die Gasdiffussionslagen bündig miteinander abschließen. Bein Konfektionieren von einzelnen MEAs aus einem bahnförmigen 7-lagigen MEA-Verbundmaterial ist eine saubere Trennkante sicherzustellen; es gilt zu vermeiden, dass einzelne Fasern der GDL unsauber durchtrennt sind, da diese die Protonenaustauschmembran elektrisch leitend überbrücken könnten. Dies würde in nachteiliger Weise die Funktionsfähigkeit der MEA und damit der diese aufnehmenden elektrochemischen Zelle beeinträchtigen.

### Aufgabenstellung

Aufgabe der vorliegenden Erfindung ist es ein Verfahren zur Herstellung einer Membran-Elektrodeneinheit (MEA) für eine elektrochemische Zelle zu beschreiben und eine Anlage zur Herstellung einer Membran-Elektrodeneinheit zu schaffen, welche ein Konfektionieren einzelner MEAs aus einem bahnförmigen 7-lagigen MEA-Verbundmaterial mit sauberer Trennkante ermöglichen.

### Technische Lösung

Gelöst wird diese Aufgabe durch ein Verfahren zur Herstellung einer Membran-Elektrodeneinheit (MEA) wie es nachfolgend beschrieben und beansprucht ist sowie durch eine Anlage zur Herstellung einer Membran-Elektrodeneinheit wie sie nachfolgend beschrieben und beansprucht ist.

Erfindungsgemäß wurde als vorteilhaft erkannt vor dem Konfektionieren, z.B. durch Stanzen der **MEA,** diese zu laminieren und die **MEA** während des Konfektionierprozesses durch eine Trägerlage zu stützen.

Das erfindungsgemäße Verfahren dient zur Herstellung einer Membran-Elektrodeneinheit (MEA) für eine elektrochemische Zelle, insbesondere eine Brennstoffzelle, und weist nachfolgende Schritte auf:
a) Bereitstellen einer
   1. Lage aufweisend eine gasdurchlässige Lage (GDL) und eine mikroporöse Lage (MPL), einer
   2. Lage als mit Katalysatoren beschichteten Membranlage aufweisend eine Protonen-Austausch-Membran (PEM) auf welcher beidseitig eine Katalysatorlage (CL) aufgebracht ist und einer
   3. Lage aufweisend eine gasdurchlässige Lage (GDL) und eine mikroporöse Lage (MPL)
   jeweils als bahnförmiges Material.
b) Zusammenführen der drei zuvor genannten Lagen derart, dass die Lagen sandwichartig aufeinander aufliegend eine bahnförmige 7-Schicht-Membran-Elektrodeneinheit (MEA) als Verbundmaterial bilden.
c) Laminieren der bahnförmigen 7-Schicht-Membran-Elektrodeneinheit, d.h. Führen der bahnförmigen 7-Schicht-Membran-Elektrodeneinheit durch mindestens ein Kalanderwalzenpaar hindurch, wobei die 7-Schicht-Membran-Elektrodeneinheit durch Temperatur- und Druckeintrag aneinandergeheftet wird. Die verschiedenen Lagen der 7-Schicht-Membran-Elektrodeneinheit können so im Weiteren als ein Bauteil verarbeitet werden.
d) Bereitstellen einer bahnförmigen Trägerlage, welche als Trägerfolie ausgeführt sein kann.
e) Zuführen der Trägerlage zur bahnförmigen 7-Schicht-Membran-Elektrodeneinheit, derart, dass die bahnförmige 7-Schicht-Membran-Elektrodeneinheit auf der Trägerlage aufliegt. Die Trägerlage dient der Verstärkung und Stützung der 7-Schicht-Membran-Elektrodeneinheit, sowie der Unterstützung des Schnittes für ein komplettes Durchschneiden der MEA und damit eine gerade Schnittkante ohne Fasern. Beide werden zusammen weitertransportiert zu einer nachfolgenden Konfektioniereinheit, z.B. einer Stanzstation.
f) Konfektionieren der 7-Schicht-Membran-Elektrodeneinheit durch Heraustrennen der Sollkontur, derart, dass einzelne bogenförmige 7-Schicht-Membran-Elektrodeneinheiten entstehen. Beim Konfektionieren aus der bahnförmigen 7-Schicht-Membran-Elektrodeneinheit werden einzelne bogenförmige 7-Schicht-Membran-Elektrodeneinheiten herausgetrennt, welche auch als MEA-Nutzen bezeichnet werden können, wohingegen das verbleibende Bahnmaterial als MEA-Abfall bezeichnet werden kann. Sofern das Konfektionieren durch Stanzen erfolgt, so handelt es sich bei dem MEA-Abfall um Stanzabfall bzw. Stanzreste. Beim Konfektionieren wird die Trägerlage nicht komplett durchtrennt, erfährt allenfalls eine Schwächung in ihrem Querschnitt. Durch das Kalandrieren der MEA vor dem Konfektionieren in Kombination mit dem Vorsehen einer Trägerlage für die Dauer des Konfektionierprozesses wird in vorteilhafter Weise sichergestellt, dass die 7-Schicht-Membran-Elektrodeneinheit entlang der vorgesehenen Trennkontur komplett und sauber durchtrennt wird. Zudem wird die 7-Schicht-Membran-Elektrodeneinheit vor eventueller Kontamination durch den darunter liegenden Werkstoff geschützt.

In vorteilhafter Weiterbildung des Verfahrens ist ein weiterer Schritt vorgesehen: g) Abziehen des Abfalls, derart, dass einzelne bogenförmige 7-Schicht-Membran-Elektrodeneinheiten verbleiben. In anderen Worten: der MEA-Abfall wird entfernt, die MEA-Nutzen bleiben.

In vorteilhafter Weiterbildung des Verfahrens ist ein weiterer Schritt vorgesehen: h) Entfernen der Trägerlage, insbesondere durch ein Delaminieren der Trägerlage von der konfektionierten MEA. Die Trägerlage dient dazu den Verfahrensschritt des Konfektionierens zu unterstützen und kann daher nach erfolgtem Konfektionieren wieder entfernt werden.

Die beiden vorgenannten Schritte Abziehen des Abfalls und Entfernen der Trägerlage können ggfs. auch zeitgleich erfolgen.

In vorteilhafter Weiterbildung des Verfahrens hat die gebildete bahnförmige 7-Schicht-Membran-Elektrodeneinheit folgenden Aufbau:
Gasdurchlässige Lage (GDL), Mikroporöse Lage (MPL), Katalysatorlage (CL), Protonen-Austausch-Membran (PEM), Katalysatorlage (CL), Mikroporöse Lage (MPL), Gasdurchlässige Lage (GDL).

In vorteilhafter Weiterbildung des Verfahrens erfolgt das Laminieren mit mindestens einem beheizten Walzenpaar. Bei den Walzenpaaren können folgende Materialpaarungen vorgesehen sein:
Stahl-Stahl, Gummi-Stahl, Gummi-Gummi. Das Laminieren erfolgt insbes. bei folgenden Bedingungen, welche sich als zweckmäßig herausgestellt haben und eine besonders gute Behandlung der bahnförmige 7-Schicht-Membran-Elektrodeneinheit gewährleisten: einem Druck im Bereich 0,5 MPa - 5 MPa bei einer Temperatur im Bereich von 100°C-200°C.

In vorteilhafter Weiterbildung des Verfahrens ist die Trägerlage eine Trägerfolie aus einem Kunststoffmaterial.

In vorteilhafter Weiterbildung des Verfahrens erfolgt das Konfektionieren durch Stanzen, insbesondere durch kontinuierliches Rotationsstanzen oder quasikontinuierliches Flachbettstanzen.

Der Stanzdruck ist dabei derart, dass die Trägerlage nicht komplett durchtrennt wird. Diese bildet so eine Stanzunterlage für die über ihren kompletten Querschnitt durchtrennte 7-Schicht-Membran-Elektrodeneinheit.

Die Erfindung betrifft auch ein Verfahren zur Herstellung einer Brennstoffzelle, wobei eine Membran-Elektrodeneinheit gemäß dem obenstehend beschriebenen Verfahren hergestellt und dann noch auf einer Seite der Membran-Elektrodeneinheit eine Dichtungsstruktur, ein sogenanntes Gasket, und dann auf beiden Seiten jeweils eine Bipolarplatte aufgebracht wird.

Die Erfindung betrifft auch eine Anlage zur Herstellung einer Membran-Elektrodeneinheit wie obenstehend beschrieben, aufweisend und - in Transport- und Materialflussrichtung gesehen - nacheinander angeordnet
a) je eine Bereitstellungseinheit zur Bereitstellung jeweils als bahnförmiges Material einer
   1. Lage aufweisend eine gasdurchlässige Lage (GDL) und eine mikroporöse Lage (MPL), einer
   2. Lage als mit Katalysatoren beschichteten Membranlage und einer
   3. Lage aufweisend eine gasdurchlässige Lage (GDL) und eine mikroporöse Lage (MPL)
b) einer Laminiereinheit zum Zusammenführen der 3 Lagen derart, dass eine bahnförmige 7-Schicht-Membran-Elektrodeneinheit gebildet wird,
d) eine Bereitstellungseinheit zum Bereitstellen einer bahnförmigen Trägerlage,
e) einer Zuführeinheit zum Zuführen der Trägerlage zur bahnförmigen 7-Schicht-Membran-Elektrodeneinheit. Die Trägerlage dient der Verstärkung und Stützung der 7-Schicht-Membran-Elektrodeneinheit und beide werden zusammen weitertransportiert zu einer nachfolgenden Stanzeinheit und schließlich
f) einer Stanzeinheit zum Konfektionieren der 7-Schicht-Membran-Elektrodeneinheit durch Heraustrennen der Sollkontur.

In Weiterbildung der Anlage ist weiterhin vorgesehen:
g) eine Entsorgungseinheit zum Aufwickeln der 7-Schicht-MEA Abfallbahn.

In Weiterbildung der Anlage ist weiterhin vorgesehen:
h) eine Entsorgungseinheit zum Delaminieren und Aufwickeln der Trägerlage.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Anlage zur Herstellung einer MEA
- Fig. 2: den Aufbau einer 7-Schicht MEA

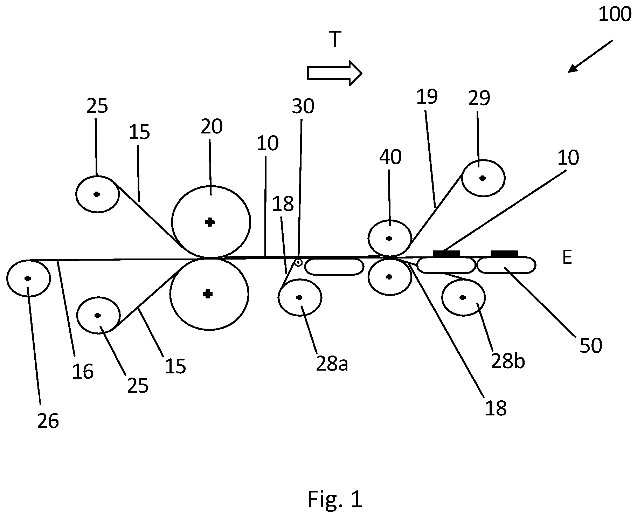

Fig. 1 zeigt eine Anlage 100 zur Herstellung einer MEA, einer Membran-Elektrodeneinheit 10. Von einer Bereitstellungseinheit 25 wird als bahnförmiges Material eine 1. Lage 15 aufweisend eine gasdurchlässige Lage (GDL) 14 und eine mikroporöse Lage (MPL) 13 zugeführt, von einer weiteren Bereitstellungseinheit 26 wird eine 2. bahnförmige Lage 16 als mit Katalysatoren 12 beschichteten Membranlage 11 zugeführt - hier in der horizontalen Transportebene - und von einer weiteren Bereitstellungseinheit 25 wird eine 3. Lage 15 erneut aufweisend eine gasdurchlässige Lage (GDL) 14 und eine mikroporöse Lage (MPL) 13 zugeführt, sodass die zweite Lage zwischen 1. und 3. Lage liegt und sandwichartig eingefasst wird. Diese drei Lagen 15, 16, 15 bilden zusammen die MEA 10 aus, welche in einer Laminiereinheit 20 zusammengeführt werden derart, dass eine bahnförmige 7-Schicht-Membran-Elektrodeneinheit als Verbundmaterial aus miteinander verbundenen Schichten gebildet wird.

Beim Führen der bahnförmigen 7-Schicht-Membran-Elektrodeneinheit 10 durch das Laminierwalzenpaar 20 hindurch wird die 7-Schicht-Membran-Elektrodeneinheit gewalzt und erfährt eine Pressung. Die verschiedenen Lagen der 7-Schicht-Membran-Elektrodeneinheit 10 werden so vor der weiteren Verarbeitung, insbesondere dem Konfektionieren, nochmals besonders gut miteinander laminiert und verbunden. Mittels einer Bereitstellungseinheit 28a wird sodann eine bahnförmige Trägerlage 18 bereitgestellt und der bahnförmigen 7-Schicht-Membran-Elektrodeneinheit 10 zugeführt, sodass die MEA 10 einseitig durch die Trägerlage 18 abgestützt wird. Beide zusammen werden in Transportrichtung T weiter zur nächsten Bearbeitungsstation transportiert, zu einer Stanzeinheit 40 ausgebildet als kontinuierlich arbeitende Rotationsstanze. Diese dient dem Konfektionieren der 7-Schicht-Membran-Elektrodeneinheit 10 durch Heraustrennen der Sollkontur. Beim Konfektionieren aus der bahnförmigen 7-Schicht-Membran-Elektrodeneinheit 10 werden also einzelne bogenförmige 7-Schicht-Membran-Elektrodeneinheiten 10 herausgetrennt, welche auch als MEA-Nutzen bezeichnet werden können, wohingegen das verbleibende Bahnmaterial als MEA-Abfall 19 bezeichnet werden kann oder als Stanzabfall bzw. Stanzrest. Beim Konfektionieren wird die Trägerlage 18 nicht komplett durchtrennt, erfährt allenfalls eine Schwächung in ihrem Querschnitt. So wird sichergestellt, dass die 7-Schicht-Membran-Elektrodeneinheit 10 entlang der vorgesehenen Trennkontur komplett durchtrennt wird.

Nachfolgend sind in der Anlage 100 eine Entsorgungseinheit 29 zum Aufwickeln der 7-Schicht-MEA Abfallbahn 19 und eine Entsorgungseinheit 28b zum Delaminieren und Aufwickeln der Trägerlage 18 vorgesehen. Das Entsorgen der MEA Abfallbahn 19 und das Delaminieren der Trägerlage 18 können - wie hier dargestellt - zeitgleich erfolgen. Denkbar wäre jedoch auch, diese Bearbeitungsstationen - in Transportrichtung gesehen - nacheinander anzuordnen. Die verbleibenden einzelne bogenförmigen 7-Schicht-Membran-Elektrodeneinheiten 10 können mittels einer Transporteinrichtung 50 (z.B. ein Vakuumband) weitertransportiert werden und so einer Weiterbearbeitung zugeführt werden, z.B. mit Gasket und Bipolarplatten versehen und dann z.B. einer Einrichtung zum Stacking der MEAs 10 oder sie können alternativ auch zwischengelagert werden.

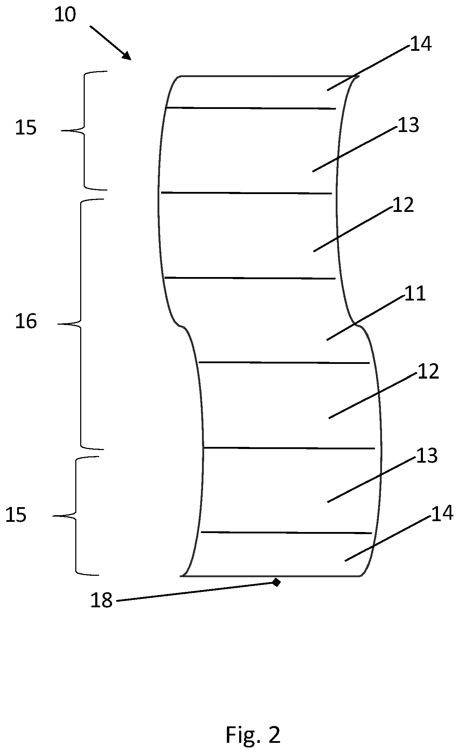

Fig. 2 zeigt den Aufbau einer 7-Schicht Membran-Elektrodeneinheit MEA 10, wie sie auf der vorstehend beschriebenen Anlage 100 herstellbar ist. Dargestellt ist nur ein Ausschnitt als Querschnittsdarstellung durch die MEA 10.

Nacheinander und aufeinander aufliegend sind angeordnet eine Gasdurchlässige Lage (GDL) 14, Mikroporöse Lage (MPL) 13, Katalysatorlage (CL) 12, Protonen-Austausch-Membran (PEM) 11, Katalysatorlage (CL) 12, Mikroporöse Lage (MPL) 13 und Gasdurchlässige Lage (GDL) 14, sodass sich ein zur Protonen-Austausch-Membran (PEM) 11 symmetrischer Aufbau ergibt. Eine gasdurchlässige Lage (GDL) 14 und eine mikroporöse Lage (MPL) 13 bilden zusammen eine 1. Lage 15,
eine Protonen-Austausch-Membran (PEM) 11 auf welcher beidseitig eine Katalysatorlage (CL) 12 aufgebracht ist bildet eine 2. Lage 16 und eine 3. Lage (15) wird nochmals durch eine gasdurchlässige Lage (GDL) 14 und eine mikroporöse Lage (MPL) 13 gebildet. Die drei Lagen sind wie obenstehend ausgeführt zu einem Verbundmaterial zusammenlaminiert.

Nur angedeutet ist die Position der Trägerlage 18, welche die MEA 10 temporär unterstützt, nämlich während dem Stanzprozess zum Konfektionieren der einzelnen bogenförmigen MEAs 10.

### Bezugszeichenliste

- 10: 7-Schicht-MEA
- 11: Protonenaustauschmembran (PEM)
- 12: Katalysatorlage (CL)
- 13: mikroporöse Lage (MPL)
- 14: gasdurchlässige Lage (GDL)
- 15: Bahn aus GDL und MPL
- 16: Bahn aus auflaminierter CL, PEM und CL

- 18: Trägerlage
- 19: 7-Schicht-MEA Abfallbahn
- 20 21: Kalandriereinheit mit Kalanderwalzenpaar

- 25: Bereitstellungseinheit zur Bereitstellung einer gasdurchlässigen Lage (GDL) und einer mikroporösen Lage (MPL)

- 28a: Bereitstellungseinheit zur Bereitstellung einer Trägerlage
- 28b: Entsorgungseinheit zum Aufwickeln der Trägerlage
- 29: Entsorgungseinheit zum Aufwickeln der 7-Schicht-MEA Abfallbahn

- 40: Stanzeinheit
- 50: Transporteinrichtung

- 100: Anlage zur Herstellung einer Membran-Elektrodeneinheit

## Patentansprüche

1. Verfahren zur Herstellung einer Membran-Elektrodeneinheit (MEA) (10) für eine elektrochemische Zelle, insbesondere eine Brennstoffzelle, mit nachfolgenden Schritten:
a) Bereitstellen einer
1. Lage (15) aufweisend eine gasdurchlässige Lage (GDL)(14) und eine mikroporöse Lage (MPL)(13), einer
2. Lage (16) als mit Katalysatoren beschichteten Membranlage aufweisend eine Protonen-Austausch-Membran (PEM) (11) auf welcher beidseitig eine Katalysatorlage (CL)(12) aufgebracht ist und einer
3. Lage (15) aufweisend eine gasdurchlässige Lage (GDL)(14) und eine mikroporöse Lage (MPL)(13)
jeweils als bahnförmiges Material
b) Zusammenführen der drei Lagen (15, 16, 15) derart, dass eine bahnförmige 7-Schicht-Membran-Elektrodeneinheit (10) gebildet wird
c) Laminieren der bahnförmigen 7-Schicht-Membran-Elektrodeneinheit
d) Bereitstellen einer bahnförmigen Trägerlage (18)
e) Zuführen der Trägerlage (18) zur bahnförmigen 7-Schicht-Membran-Elektrodeneinheit (10), derart, dass die bahnförmigen 7-Schicht-Membran-Elektrodeneinheit (10) auf der Trägerlage (18) aufliegt,
f) Konfektionieren der 7-Schicht-Membran-Elektrodeneinheit (10) durch Heraustrennen der Sollkontur, derart, dass einzelne bogenförmige 7-Schicht-Membran-Elektrodeneinheiten (10) entstehen

2. Verfahren nach Anspruch 1 mit dem weiteren Schritt
g) Abziehen des Abfalls (19), derart, dass einzelne bogenförmige 7-Schicht-Membran-Elektrodeneinheiten (10) verbleiben.

3. Verfahren nach einem der vorangehenden Ansprüche mit dem weiteren Schritt:
h) Entfernen der Trägerlage (18), insbesondere durch ein Delaminieren der Trägerlage (18).

4. Verfahren nach einem der vorangehenden Ansprüche, **dadurch gekennzeichnet, dass** die in Schritt b) gebildete bahnförmige 7-Schicht-Membran-Elektrodeneinheit folgenden Aufbau hat:
Gasdurchlässige Lage (GDL)(14), Mikroporöse Lage (MPL)(13), Katalysatorlage (CL)(12), Protonen-Austausch-Membran (PEM)(11), Katalysatorlage (CL)(12), Mikroporöse Lage (MPL)(13), Gasdurchlässige Lage (GDL)(14).

5. Verfahren nach einem der vorangehenden Ansprüche, **dadurch gekennzeichnet, dass**
die Trägerlage (18) eine Trägerfolie aus einem Kunststoffmaterial ist.

6. Verfahren nach einem der vorangehenden Ansprüche,
wobei in Schritt f) das Konfektionieren durch Stanzen erfolgt, insbesondere durch kontinuierliches Rotationsstanzen oder quasikontinuierliches Flachbettstanzen.

7. Verfahren zur Herstellung einer Brennstoffzelle, wobei eine Membran-Elektrodeneinheit (10) gemäß dem Verfahren nach einem der vorangehenden Ansprüche hergestellt wird, dann auf einer Seite der Membran-Elektrodeneinheit eine Dichtungsstruktur und dann auf beiden Seiten jeweils eine Bipolarplatte aufgebracht wird.

8. Anlage (100) zur Herstellung einer Membran-Elektrodeneinheit (10) gemäß dem Verfahren nach Anspruch 1, aufweisend
a) je eine Bereitstellungseinheit (21, 25) zur Bereitstellung jeweils als bahnförmiges Material einer
1. Lage (15) aufweisend eine gasdurchlässige Lage (GDL) (14)und eine mikroporöse Lage (MPL)(13), einer
2. Lage(16) als mit Katalysatoren (12) beschichteten Membranlage (11) und einer
3. Lage (15) aufweisend eine gasdurchlässige Lage (GDL)(14) und eine mikroporöse Lage (MPL)(13)
b) einer Laminiereinheit (20) zum Zusammenführen der 3 Lagen derart, dass eine bahnförmige 7-Schicht-Membran-Elektrodeneinheit gebildet wird
d) eine Bereitstellungseinheit (28a) zum Bereitstellen einer bahnförmigen Trägerlage (18)
e) Eine Zuführungder Trägerlage (18) zur bahnförmigen 7-Schicht-Membran-Elektrodeneinheit (10)
f) einer Stanzeinheit (40) zum Konfektionieren der 7-Schicht-Membran-Elektrodeneinheit (10) durch Heraustrennen der Sollkontur.

9. Anlage zur Herstellung einer Membran-Elektrodeneinheit gemäß Anspruch 8 mit
g) einer Entsorgungseinheit (29) zum Aufwickeln der 7-Schicht-MEA Abfallbahn (19).

10. Anlage zur Herstellung einer Membran-Elektrodeneinheit gemäß Anspruch 8 oder 9 mit
h) einer Entsorgungseinheit (28b) zum Delaminieren und Aufwickeln der Trägerlage (18).
